# EUROPÄISCHE PATENTSCHRIFT

(11) **EP 2 476 303 B1**
(45) Veröffentlichungstag und Bekanntmachung des Hinweises auf die Patenterteilung: **11.11.2015**
(21) Anmeldenummer: 11000273.0
(22) Anmeldetag: 14.01.2011
(51) Int. Cl.: A01D 34/82

(54) **Handgeführtes Bodenbearbeitungsgerät, insbesondere Rasenmäher**
Handheld soil cultivation device, in particular lawnmower
Appareil de traitement de sol manuel, notamment tondeuse

(43) Veröffentlichungstag der Anmeldung: 18.07.2012
(73) Patentinhaber: OUTILS WOLF, 67165 Wissembourg Cedex (FR)
(72) Erfinder:
(74) Vertreter: Lemcke, Brommer & Partner Patentanwälte Partnerschaft mbB

(56) Entgegenhaltungen:
- EP-A1- 1 752 036
- EP-A2- 1 512 319
- EP-A2- 1 902 608
- US-A- 5 765 857

## Beschreibung

Die Erfindung betrifft ein handgeführtes Bodenbearbeitungsgerät, insbesondere Rasenmäher, das ein fahrbares Gehäuse mit einem schräg nach oben zur Bedienungsperson laufenden Führungsbügel aufweist, der ober ein Schwenklager am Gehäuse gelagert und einerseits in unterschiedlichen Arbeitspositionen arretierbar ist, um sein oberes Ende an die von der Bedienungsperson gewünschte Arbeitshöhe anzupassen, wobei der Führungsbügel andererseits aus den Arbeitspositionen heraus nach oben über das Gehäuse hinweg in eine nach vorn geneigte Ruheposition umklappbar ist und wobei die Schwenkachse für die Einstellung der unterschiedlichen Arbeitspositionen und die Schwenkachse für das Umklappen in die Ruheposition des Fühmngsbügels Identisch sind.

Die Erfindung wird nachfolgend am Beispiel eines Rasenmähers beschrieben, sie bezieht sich aber gleichwohl auch auf andere Bodenbearbeitungsgeräte wie Vertikutierer, Bodenfräser, Kehrmaschinen und dergleichen.

Bei derartigen Geräten besteht grundsätzlich das Bedürfnis, den Führungsbügel auf unterschiedliche Höhen einzustellen und zu arretieren, damit sein oberes Ende in eine ergonomisch günstige Position zur Bedienungsperson gebracht werden kann.

Für diese Höhenverstellung gibt es bereits verschiedene Konstruktionen. Insbesondere ist es bekannt, den Führungsbügel schwenkbar am Gehäuse des Bearbeltungsgerätes zu lagern und in der gewünschten Schwenkstellung formschlüssig zu arretieren.

Stattdessen ist es auch bekannt, den Führungsbügel etwa in halber Höhe durch ein Zwischengelenk zu teilen und dort die Höhenverstellung vorzunehmen. Neben dieser Höhenverstellung soll der Führungsbügel auch über das Gehäuse des Bodenbearbeitungsgerätes hinweg in eine nach vorn geneigte Ruheposition verschwenkbar sein für den Fall, dass das Bodenbearbeitungsgerät in Platz sparender Form transportiert oder eingelagert werden soll.

Ein Bodenbearbeitungsgerät mit den Merkmalen des Oberbegriffes von Patentanspruch 1 ist im Wesentlichen aus der EP 1 752 036 derselben Anmelderin bekannt. Dort weist der Führungsbügel an seinen beiden unteren Enden jeweils ein Arretierelement in Form eines in Querrichtung vorstehenden Bolzens auf, der mit mehreren am Gehäuse des Bearbeitungsgerätes angeordneten Ausnehmungen korrespondiert und den Führungsbügel somit in einer gewünschten Arbeitsposition festhält. Damit die Bolzen in ihren Ausnehmungen verharren, werden sie durch einen schwenkbaren Sperrhebel in der Arretierstellung gehalten.

Um die Verstellung des Führungsbügels zu erleichtern, unterliegt er einer Vorspannung in Querrichtung in der Weise, dass die unteren Enden des Führungsbügels bestrebt sind, ihre Bolzen selbsttätig aus der formschlüssigen Arretierung herauszuziehen, wenn der Sperrhebel aus seiner Arretierstellung in seine Freigabestellung verschwenkt wird. Die Bedienungsperson braucht also lediglich den Sperrhebel in die Freigabestellung zu verstellen, wodurch sich automatisch die formschlüssige Arretierung löst und der Führungsbügel in die ergonomisch günstigste Position verstellt werden kann. Es genügt dann, den Sperrhebel wieder in die Arretierstellung zu verschwenken. Letzteres bedarf eines gewissen Kraftaufwandes, weil nicht nur die Vorspannung der Bolzen, sondern auch Reibungskräfte zu überwinden sind.

Der vorliegenden Erfindung liegt die Aufgabe zugrunde, die Verstellbarkeit des Führungsbügels noch weiter zu erleichtern, und zwar sowohl was die Einstellung und Arretierung in der gewünschten Arbeitsposition angeht, wie auch was das Umklappen des Führungsbügels nach oben über das Gehäuse hinweg in die Ruheposition angeht. Nicht zuletzt soll sich die Erfindung durch stabilen, zuverlässigen Aufbau und kostengünstige Herstellung auszeichnen.

Diese Aufgabe wird erfindungsgemäß dadurch gelöst, dass das Schwenklager des Führungsbügels zwei axial versetzte Schwenkbereiche aufweist, von denen der erste Schwenkbereich die genannten Arbeitspositionen umfasst, während der zweite Schwenkbereich das Umklappen des Führungsbügels aus den Arbeitspositionen in die zumindest eine Ruheposition umfasst, dass eine in Schwenkachsenrichtung wirkende Klemmvorrichtung vorgesehen ist, die die beiden Schwenkbereiche wahlweise freigibt oder blockiert und dass beim Lösen der Klemmvorrichtung die Freigabe des ersten Schwenkbereiches vor der Freigabe des zweiten Schwenkbereiches erfolgt.

Die erfindungsgemäße Aufteilung in zwei Schwenkbereiche erleichtert die Handhabung, insbesondere wenn im ersten Schwenkbereich die Arbeitsposition des Führungsbügels an die ergonomisch günstigste Position entsprechend der Größe der Bedienungsperson angepasst werden soll, denn es ist nicht mehr zu befürchten, dass der Führungsbügel versehentlich aus dem ergonomisch günstigen Bereich, in welchem die Arbeitspositionen angeordnet sind, herausgeschwenkt wird.

Für die Begrenzung des ersten Schwenkbereiches empfiehlt es sich, zwei Anschläge vorzusehen, von denen der eine Anschlag die höchste Arbeitsposition, der andere Anschlag die tiefste Arbeitsposition des Führungsbügels definiert.

Damit eine feinstufige Verstellung des Führungsbügels im ersten Schwenkbereiches, also eine feine Unterteilung zwischen den Arbeitspositionen möglich wird, empfiehlt es sich, mehrere in Schwenkrichtung eng aufeinander folgende Vorsprünge und/oder Vertiefungen vorzusehen, von denen die einen gehäusefest angeordnet sind, während die anderen mit dem Führungsbügel in Wirkverbindung stehen.

Zweckmäßig sind diese Vorsprünge und/oder Vertiefungen durch zwei Zahnkränze gebildet, die in Axialrichtung formschlüssig miteinander in Eingriff bringbar sind, indem einer der beiden Zahnkränze durch die Klemmvorrichtung in Axialrichtung verstellt wird. Auf diese Weise erhält man eine besonders stabile formschlüssige Fixierung des Führungsbügels In der gewünschten Arbeitsposition.

Der zweite Schwenkbereich, der für das Vorklappen des Führungsbügels in die Ruheposition dient, braucht nicht zwingend Anschläge, um den Schwenkbereich zu begrenzen. Im Sinne einer leichteren Bedienbarkeit empfiehlt es sich aber, den zweiten Schwenkbereich zumindest in der tiefsten Arbeitsposition des Führungsbügels durch einen Anschlag zu begrenzen, um ein Herunterfallen des Führungsbügels zu verhindern.

Für das Anfahren der Ruheposition des Führungsbügels ist es ebenfalls nicht zwingend erforderlich, einen den Schwenkbereich begrenzenden Anschlag vorzusehen. Es kann aber im Einzelfall durchaus zweckmäßig sein, eine bestimmte Ruheposition des Führungsbügels vorzugeben und den Schwenkbereich dort durch einen entsprechend positionierten Anschlag zu begrenzen, insbesondere wenn ein Herunterfallen des Führungsbügels auf das Gehäuse des Bodenbearbeitungsgerätes verhindert werden soll.

Für die Ausbildung der Klemmvorrichtung, die durch ihre Axialverstellung wahlweise den ersten Schwenkbereich oder beide Schwenkbereiche freigibt bzw. blockiert, bieten sich dem Fachmann verschiedene Möglichkeiten.

Besonders zweckmäßig ist es, wenn die Klemmvorrichtung durch eine axiale Spannschraube - fluchtend mit der Schwenkachse des Führungsbügels - gebildet ist. Man braucht dann lediglich diese Spannschraube mehr oder weniger weit aufzuschrauben, je nachdem, ob nur der erste Schwenkbereich oder beide Schwenkbereiche freigegeben werden sollen.

Damit die Spannschraube nicht allzu lange verdreht werden muss, um den erforderlichen Axialweg für die Freigabe bzw. für das Blockieren der Schwenkbereiche zurückzulegen, besteht eine besonders vorteilhafte Ausgestaltung darin, dass sie zumindest einen axialen Abschnitt mit reduziertem Durchmesser aufweist. In diesem Abschnitt entfaltet die Spannschraube dann keine Haltekraft, sondern rutscht durch bis zum Ende dieses im Durchmesser reduzierten Abschnittes. Sieht man beispielsweise nur ein bis zwei Umdrehungen der Spannschraube bis zum Erreichen eines ersten Abschnittes mit reduziertem Durchmesser vor, so braucht die Spannschraube nur ein bis zwei Umdrehungen durchführen und gibt dann bereits den ersten Schwenkbereich frei. Folgt dann nach ein bis zwei Gewindegängen ein zweiter im Durchmesser reduzierter Abschnitt, so wird entsprechend schnell der zweite Schwenkbereich freigegeben. Die gleichen Vorteile ergeben sich auch beim Anziehen der Spannschraube, weil dann ebenfalls die Axialwege der Spannschraube viel schneller passiert werden können als wenn die Spannschraube während des gesamten axialen Stellweges verdreht werden müsste.

Alternativ ist es aber auch möglich, die Klemmvorrichtung durch einen Stellhebel zu bilden, mit dem drei Axialpositionen einstellbar sind, nämlich eine erste Axialposition für die Blockierung beider Schwenkbereiche, eine zweite Axialposltion für die Freigabe des ersten Schwenkbereiches und eine dritte Axialposition für die zusätzliche Freigabe des zweiten Schwenkbereiches. Die genannten unterschiedlichen Axialpositionen können günstigerweise durch am Stellhebel angebrachte Nocken oder Kulissenbahnen erzeugt werden.

Die Axialverschiebung zum Erreichen des ersten oder des zweiten Schwenkbereiches könnte zwangsweise von der Klemmvorrichtung selbst erzeugt werden. Die Handhabung der Klemmvorrichtung wird aber sehr erleichtert, wenn diese Axialverschiebung durch externe Federkraft erzeugt wird. Dies kann etwa in der Weise erfolgen, dass im Schwenklager eine Feder angeordnet ist, die im Sinne einer Freigabe der Schwenkbereiche wirksam ist. Alternativ kann diese Federkraft aber auch durch Vorspannung des Führungsbügels erzeugt werden, so dass der Führungsbügel von selbst in den ersten und/oder zweiten Schwenkbereich hineinspringt, je nachdem wie weit die Klemmvorrichtung gelöst wird.

Weitere Einzelheiten der Erfindung ergeben sich aus der Beschreibung eines Ausführungsbeispieles und aus der Zeichnung; dabei zeigt
- Figur 1:: einen Rasenmäher in der Seitenansicht mit dem Führungsbügel in mehreren angedeuteten Arbeitspositionen;
- Figur 2:: den gleichen Rasenmäher in vergrößerter Darstellung ohne Grassammelbehälter mit dem Führungsbügel in der Ruheposition;
- Figur 3:: drei Axialschnitte durch das eine Schwenklager des FOhrungsbügels in drei Axialpositionen der Klemmvorrichtung mit drei Ausschnittvergrößerungen;
- Figur 4:: zwei Schrägansichten des Schwenklagers im ersten Schwenkbereich ohne Führungsbügel und ohne Klemmvorrichtung;
- Figur 5:: eine Explosionsdarstellung des Schwenklagers in Schragansicht;
- Figur 6:: eine Ansicht entsprechend Figur 5, jedoch in zusammengeschraubtem Zustand.

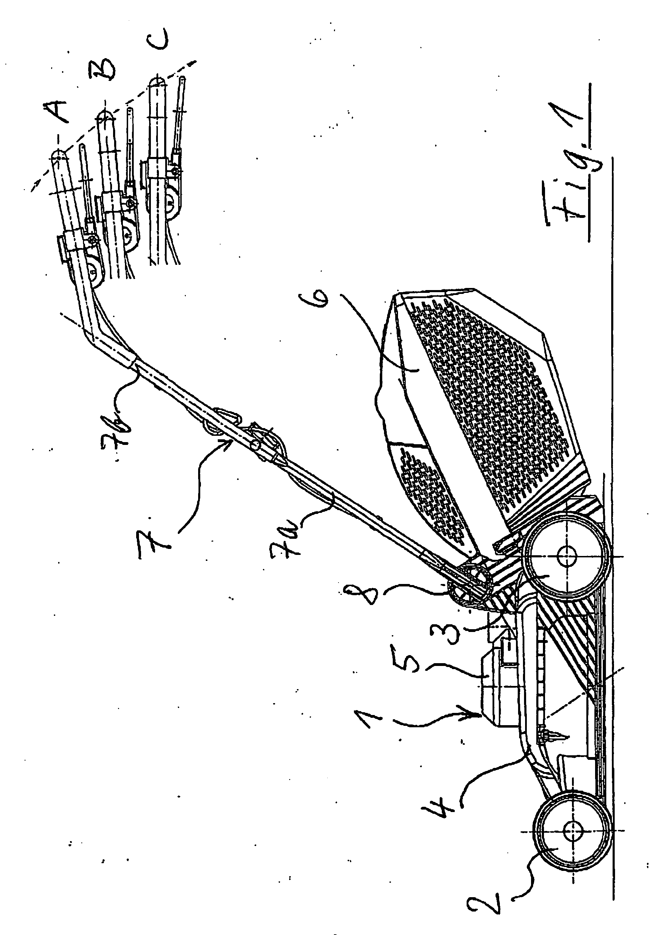

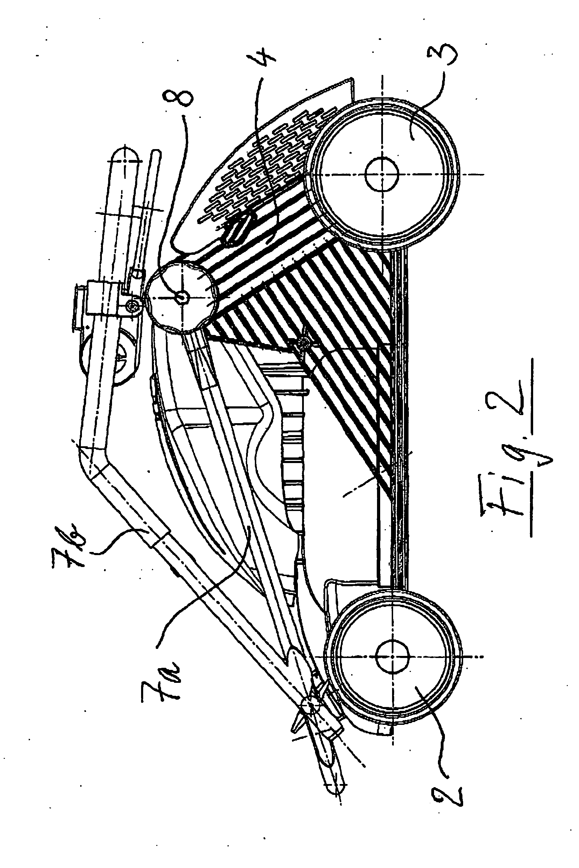

In Figur 1 sieht man einen an sich bekannten Rasenmäher 1 mit Vorderrädern 2, Hinterrädern 3, einem Gehäuse 4, einem Antriebsmotor 5 und einem Grassammelbehälter 6. Wesentlich ist nun die schwenkbare Lagerung seines die üblichen Bedienungselemente tragenden Führungsbügels 7 am Gehäuse 4 mittels eines speziellen Schwenklagers 8. Der Führungsbügel besteht in an sich bekannter Weise aus 2 Abschnitten 7a und 7b, die über ein arretierbares Gelenk zusammen klappbar sind wie in Figur 2 dargestellt.

Des Weiteren ist In Figur 1 angedeutet, dass der Führungsbügel 7 in drei unterschiedlich hohe Arbeitspositionen A, B und C eingestellt werden kann. Diese drei Arbeitspositionen bilden den so genannten ersten Schwenkbereich des Führungsbügels. Selbstverständlich kann dieser erste Schwenkbereich auch weitere, eventuell feiner unterteilte Arbeitspositionen umfassen. Das Einstellen dieser unterschiedlichen Arbeitspositionen erfolgt Ober das Schwenklager 8, worauf später noch eingegangen wird.

Figur 2 zeigt den gleichen Rasenmäher mit in eine Ruheposition heruntergeklapptem Führungsbügel. Wesentlich dabei ist, dass das Herunterklappen des unteren Abschnittes 7a des Führungsbügels in seiner Ruheposition wiederum über das Schwenklager 8 erfolgt, jedoch In einem zweiten, axial versetzten Schwenkbereich. Unabhängig davon, kann der obere Abschnitt 7b des Führungsbügels über das Mähergehäuse 4 zurückgeklappt werden, damit der Mäher zusammen mit dem Führungsbügel einen möglichst kompakten Aufbau hat.

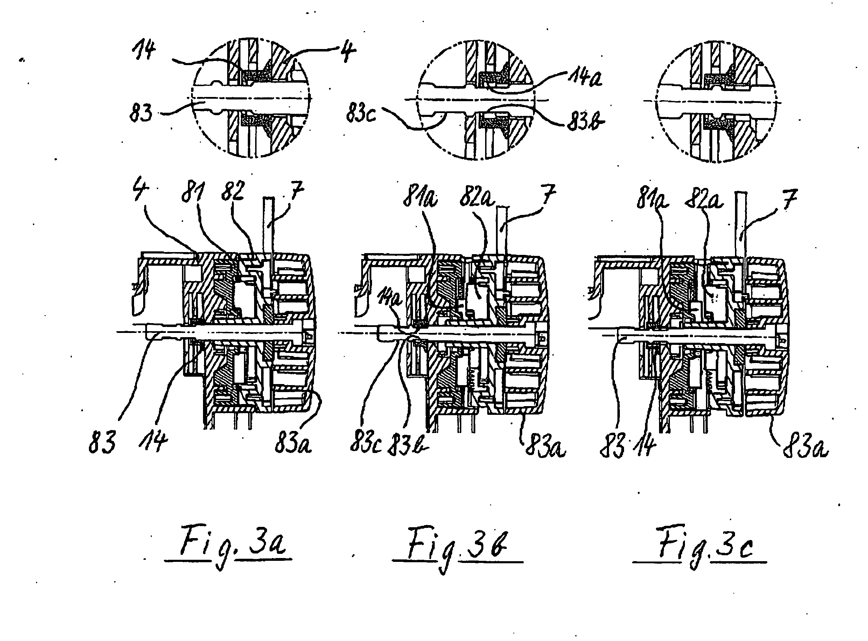

Der Aufbau des Schwenklagers 8 ergibt sich aus den Figuren 3 bis 5. Es besteht aus einem ersten Zahnkranz 81, der drehfest mit dem Mähergehäuse 4 verbunden ist, ggf. auch einstückig an das Gehäuse 4 angeformt sein kann. Mit seiner in Axialrichtung vorstehenden Verzahnung steht er in Eingriff mit einem zweiten Zahnkranz 82. Dieser Zahnkranz 82 ist drehbar und axial verschiebbar im Schwenklager 8 gelagert und kann daher aus seiner formschlüssigen Verzahnung und Arretierung am Zahnkranz 81 gelöst werden.

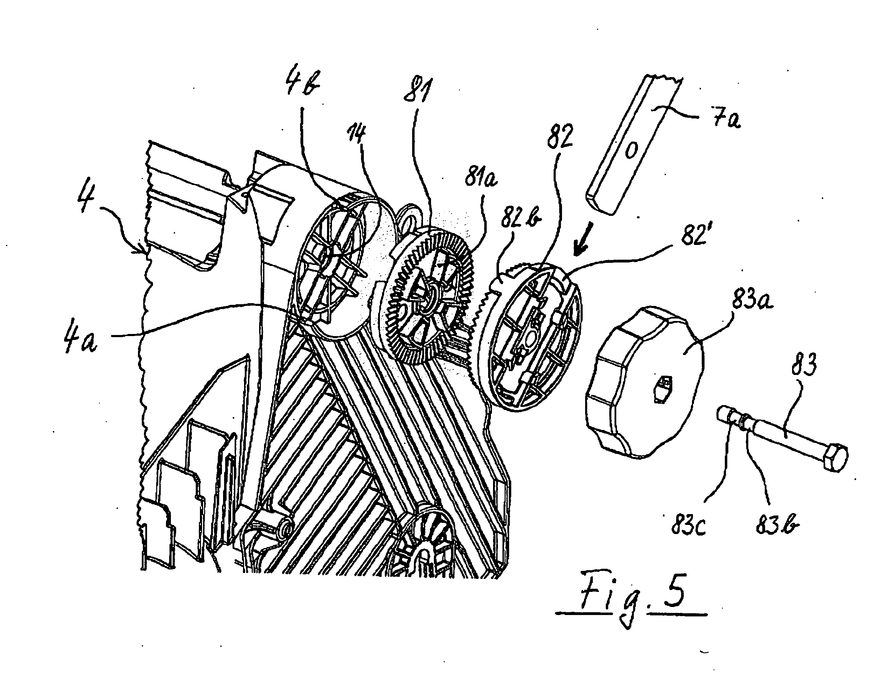

Des Weiteren ist der Zahnkranz 82 mit dem Führungsbügel 7 verbunden. Er weist dazu einen Radialschlitz 82' (siehe Figur 5) auf, in welchen der untere Abschnitt 7a des Führungsbügels 7 formschlüssig und drehfest hineinpasst.

Welche Axialposition der Führungsbügel 7 und der Zahnkranz 82 einnehmen, das heißt, ob diese Teile schwenkbar oder starr mit dem Gehäuse 4 des Rasenmähers verbunden sind, ob also nur der erste oder auch der zweite Schwenkbereich freigegeben oder blockiert ist, hängt von der Stellung der Klemmvorrichtung ab. Diese Klemmvorrichtung ist als Spannschraube 83 ausgebildet, die die Schwenkachse des Schwenklagers 8 bildet und durch ein relativ großes Handrad 83a leicht von Hand auf- und zugedreht werden kann, wobei sie relativ zu einer am Gehäuse 4 angeordneten Mutter 14 verschraubt wird.

Nachfolgend werden die drei Funktionen des Schwenklagers beschrieben. Dabei wird mit Figur 3a begonnen, weil dies der Betriebszustand des Rasenmähers ist, bei dem der Führungsbügel 7 starr am Rasenmäher-Gehäuse 4 fixiert ist. Dieser Zustand wird dann erreicht, wenn die Spannschraube 83 fest angezogen ist, so dass die Zahnkränze 81 und 82 drehfest miteinander verbunden sind.

Soll nun beispielsweise der Führungsbügel auf eine andere Arbeitshöhe eingestellt werden, wie dies in Figur 1 angedeutet ist, so wird die Spannschraube 83 etwas gelöst. Dadurch entsteht Axialspiel zwischen den Zahnkränzen 81 und 82, das heißt, dass der so genannte erste Schwenkbereich des Führungsbügels freigegeben wird, wie in Figur 3b dargestellt. Dieser erste Schwenkbereich erstreckt sich im Ausführungsbeispiel gemäß Figur 1 Ober drei verschiedene Arbeitspositionen A, B und C. Er wird an seinen Enden durch axial vorstehende Anschläge 81a bzw. 82a an den Zahnkränzen 81 und 82 begrenzt. Diese Anschläge sind so ausgebildet, dass sie auch dann noch wirksam sind, wenn die Zahnkränze leicht axial voneinander distanziert sind, wie in Figur 3b dargestellt.

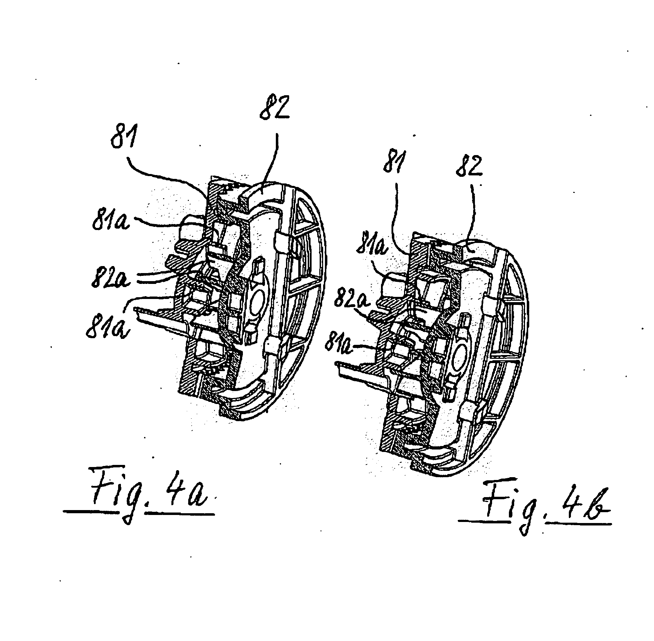

Man sieht die entsprechenden Anschläge 81a und 82a in Figur 4; sie sind derart positioniert, dass mit den beiden Zahnkränzen 81 und 82 nur eine Relativdrehung entsprechend dem ersten Schwenkbereich durchfahren werden kann, wobei Figur 4a die Anschläge 82a des Zahnkranzes 82 in der höchsten, Figur 4b in der tiefsten Stellung des Führungsbügels zeigt.

Hat der Führungsbügel 7 die neue Wunschposition erreicht, so wird die Schraube 83 wieder angezogen, so dass sich der in Figur 3a dargestellte Zustand einstellt, der erste Schwenkbereich also wieder blockiert ist.

Soll der Führungsbügel 7 jedoch in seine Ruheposition umgeklappt werden, so wird die Spannschraube 83 noch weiter gelöst als in Figur 3b dargestellt. Es wird dann nicht nur der erste, sondern auch der zweite Schwenkbereich freigegeben. Dabei ergibt sich der in Figur 3c dargestellte Zustand, wo die Anschläge 81 a, 82a nicht mehr zusammenstoßen, sondern im Umfangsrichtung einander passieren können. Dieser Zustand ergibt sich automatisch dadurch, dass der Führungsbügel 7 eine Vorspannung aufweist, die bestrebt ist, die Bügelenden und somit auch die zugeordneten Zahnkränze 82 zu spreizen. Die Spannschraube 83 braucht also lediglich etwas stärker gelöst zu werden, so dass der Führungsbügel von selbst den Zahnkranz 82 in die in Figur 3c gezeigte Stellung verschiebt. Er kann dann um die Schwenkachse, die nach wie vor von der Schraube 83 gebildet wird, über den Rasenmäher hinweg nach vorn verschwenkt werden. Anschließend kann der obere Abschnitt 7b des Führungsbügels in Gegenrichtung geklappt werden, damit sich der erwünschte kompakte Aufbau ergibt, wie dies in Figur 2 dargestellt ist.

Die in Figur 3a bis 3c jeweils oben abgebildeten Ausschnittvergrößerungen zeigen, dass die Spannschraube 83 zwei im Durchmesser reduzierte Abschnitte 83b und 83c aufweist. Sie bieten den Vorteil, dass die Spannschraube 83 ihren axialen Stellweg nicht allein durch Verschraubung zurücklegt, sondern entsprechend der Länge der im Durchmesser reduzierten Abschnitte 83b und 83c axial frei beweglich ist. Soll also beispielsweise der erste Schwenkbereich am Schwenklager 8 eingestellt werden, so braucht die Spannschraube 83 nur einige Gewindegänge gelöst zu werden, bis der freie Abschnitt 83b mit dem Gewinde der Mutter 14 korrespondiert, so dass die Spannschraube ohne weitere Verdrehung axial entgegen der Spannrichtung verrutscht, bis der nächste Gewindeabschnitt der Spannschraube beginnt.

Gleichermaßen dient ein weiterer im Durchmesser reduzierter Abschnitt 83c der Spannschraube zum schnelleren Erreichen des zweiten Schwenkbereiches.

Damit der Führungsbügel 7 bei dem in Figur 3c dargestellten Zustand nicht unkontrolliert nach unten fällt, empfiehlt es sich, den zweiten Schwenkbereich durch einen Anschlag dort zu begrenzen, wo der Führungsbügel die unterste Position C in Figur 1 einnimmt. Dies kann beispielsweise durch einen zweiten Anschlag 82b am Zahnkranz 82 erfolgen, der wie in Figur 5 dargestellt mit gehäusefesten Anschlägen 4a und 4b zusammen wirkt. Der untere Anschlag 4a definiert dabei die Position des Führungsbügels in der maximal nach vorn geklappten Ruheposition, der obere Anschlag 4b in der niedrigsten Arbeitsposition C.

Selbstverständlich lassen sich die Anschläge, die den zweiten Schwenkbereich begrenzen, dadurch überbrücken, dass die Spannschraube weiter gelöst wird, derart, dass genügend axialer Freiraum zur Verfügung gestellt wird, der ein gegenseitiges Passieren der Anschläge gestattet. Der Führungsbügel ist dann frei verschwenkbar.

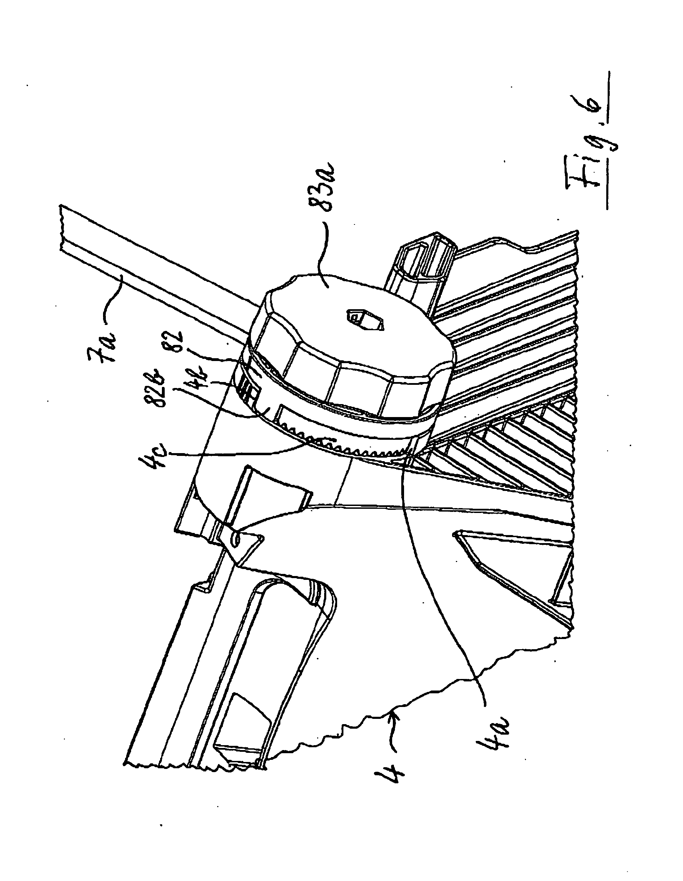

Figur 6 zeigt eine ähnliche Ansicht wie Figur 5, jedoch in zusammengeschraubtem Zustand des Schwenklagers. Man sieht dabei zum einen, wie der Anschlag 82b des Zahnkranzes 82 mit den gehäusefesten Anschlägen 4a und 4b zusammenwirkt. Zum anderen erkennt man, dass zwischen dem Gehäuse 4 und dem Zahnkranz 82 ein in Umfangsrichtung verlaufendes Sichtfenster 4c ausgespart worden ist. Dieses Sichtfenster erlaubt den Blick auf die Axialverzahnung zwischen den beiden Zahnkränzen 81 und 82 und erleichtert somit die Handhabung der Spannschraube 83a, um den ersten oder den zweiten Schwenkbereich für den Führungsbügel 7 einzustellen.

## Patentansprüche

1. Handgeführtes Bodenbearbeitungsgerät, insbesondere Rasenmäher, das ein fahrbares Gehäuse (4) mit einem schräg nach oben zur Bedienungsperson laufenden Führungsbügel (7) aufweist, der Ober ein Lager (8) schwenkbar am Gehäuse (4) gelagert und einerseits in unterschiedlichen Arbeitspositionen (A, B, C) arretierbar ist, um sein oberes Ende an die von der Bedienungsperson gewünschte Arbeitshöhe anzupassen, wobei der Führungsbügel (7) andererseits aus den Arbeitspositionen (A, B, C) heraus in zumindest eine nach vorn geneigte Ruheposition umklappbar ist und wobei die Schwenkachse für die Einstellung unterschiedlicher Arbeitspositionen und die Schwenkachse für das Umklappen in die Ruheposition identisch sind, **dadurch gekennzeichnet,**
**dass** das Schwenklager (8) zwei axial versetzte Schwenkbereiche aufweist, von denen der erste Schwenkbereich die genannten Arbeitspositionen (A, B, C) umfasst, während der zweite Schwenkbereich das Umklappen des Führungsbügels (7) aus den Arbeitspositionen in zumindest eine Ruheposition umfasst, dass eine in Schwenkachsenrichtung wirkende Klemmvorrichtung (83) vorgesehen ist, die die beiden Schwenkbereiche wahlweise freigibt oder blockiert und dass die Freigabe des ersten Schwenkbereiches vor der Freigabe des zweiten Schwenkbereiches erfolgt.

2. Bodenbearbeitungsgerät nach Anspruch 1,
**dadurch gekennzeichnet,**
**dass** der erste Schwenkbereich durch Anschläge (81a, 82a) für die höchste und tiefste Arbeitsposition des Führungsbügels (7) begrenzt ist.

3. Bodenbearbeitungsgerät nach Anspruch 1,
**dadurch gekennzeichnet.**
**dass** der erste Schwenkbereich mehrere in Schwenkrichtung eng aufeinander folgende Vorsprünge und/oder Vertiefungen aufweist, von denen die einen (81) gehäusefest angeordnet sind, während die anderen (82) mit dem Führungsbügel (7) in Wirkverbindung stehen.

4. Bodenbearbeitungsgerät nach Anspruch 3,
**dadurch gekennzeichnet,**
**dass** die Vorsprünge und Vertiefungen des ersten Schwenkbereiches durch zwei Zahnkränze (81, 82) gebildet sind, die in Axialrichtung In formschlüssigen Eingriff bringbar sind, indem einer der beiden Zahnkränze (82) durch die Klemmvorrichtung (83) in Axialrichtung verstellbar ist.

5. Bodenbearbeitungsgerät nach Anspruch 1,
**dadurch gekennzeichnet,**
**dass** der zweite Schwenkbereich durch Anschläge (4b, 82b) in der tiefsten Arbeitsposition des Führungsbügels (7) begrenzt ist.

6. Bodenbearbeitungsgerät nach Anspruch 1,
**dadurch gekennzeichnet,**
**dass** der zweite Schwenkbereich durch Anschläge (4a, 82b) in der niedrigsten Ruheposition (C) des Führungsbügels (7) begrenzt ist.

7. Bodenbearbeitungsgerät nach Anspruch 1,
**dadurch gekennzeichnet,**
**dass** die Klemmvorrichtung durch eine axiale Spannschraube (83) - insbesondere fluchtend mit der Schwenkachse des Führungsbügels (7) ∼ gebildet ist.

8. Bodenbearbeitungsgerät nach Anspruch 7,
**dadurch gekennzeichnet,**
**dass** die axiale Spannschraube (83) zumindest einen axialen Abschnitt mit reduziertem Durchmesser aufweist.

9. Bodenbearbeitungsgerät nach Anspruch 1,
**dadurch gekennzeichnet,**
**dass** die Klemmvorrichtung durch einen Stellhebel gebildet ist, mit dem drei Axialpositionen einstellbar sind.

10. Bodenbearbeitungsgerät nach Anspruch 9,
**dadurch gekennzeichnet,**
**dass** die Axialpositionen zumindest teilweise durch an dem Stellhebel angebrachte Nocken oder Kulissenbahnen definiert sind.

11. Bodenbearbeitungsgerät nach Anspruch 1,
**dadurch gekennzeichnet,**
**dass** beim Lösen der Klemmvorrichtung (83) die Freigabe zumindest des ersten Schwenkbereiches automatisch durch Federkraft erfolgt.

12. Bodenbearbeitungsgerät nach Anspruch 11,
**dadurch gekennzeichnet,**
**dass** die Federkraft durch eine im Schwenklager (8) angeordnete Feder erfolgt.

13. Bodenbearbeitungsgerät nach Anspruch 11,
**dadurch gekennzeichnet,**
**dass** die Federkraft durch eine in Schwenkachsenrichtung wirkende Vorspannung des Führungsbügels (7) erzeugt wird.

14. Bodenbearbeitungsgerät nach Ansprüche 2 und 5,
**dadurch gekennzeichnet,**
**dass** zwecks freier Verschwenkbarkeit des Führungsbügels (7) die Anschläge (81a, 82a. 4b, 82b) durch weiteres Lösen der Klemmvorrichtung (83) Überbrückbar sind.

## Claims

1. Hand-guided soil-working machine, especially a lawnmower, having a mobile housing (4) with a guide handle (7) that extends obliquely upwards towards the operator, which guide handle is pivotally mounted on the housing (4) by means of a bearing (8) and on the one hand can be arrested in different operating positions (A, B, C) in order to match its upper end to the operating height desired by the operator, while on the other hand the guide handle (7) can be folded out of the operating positions (A, B, C) into at least one forwardly inclined rest position, and wherein the pivot axis for setting different operating positions and the pivot axis for folding into the rest position are identical,
**characterised in that**
the pivot bearing (8) has two axially displaced pivoting regions of which the first pivoting region comprises the said operating positions (A, B, C), while the second pivoting region comprises the folding of the guide handle (7) out of the operating positions into at least one rest position; a clamping device (83) is provided, which acts in the direction of the pivot axis and releases or blocks the two pivoting regions as desired; and the release of the first pivoting region is effected before the release of the second pivoting region.

2. Soil-working machine according to claim 1,
**characterised in that**
the first pivoting region is defined by stops (81 a, 82a) for the highest and lowest operating positions of the guide handle (7).

3. Soil-working machine according to claim 1,
**characterised in that**
the first pivoting region has a plurality of projections and/or indentations following closely one after the other in the direction of pivoting, some (81) of which are arranged in fixed position with respect to the housing while the others (82) are in operative connection with the guide handle (7).

4. Soil-working machine according to claim 3,
**characterised in that**
the projections and indentations of the first pivoting region are formed by two ring gears (81, 82) which can be brought into interlocking engagement in the axial direction as a result of one of the two ring gears (82) being displaceable in the axial direction by the clamping device (83).

5. Soil-working machine according to claim 1,
**characterised in that**
the second pivoting region is defined by stops (4b, 82b) in the lowest operating position of the guide handle (7).

6. Soil-working machine according to claim 1,
**characterised in that**
the second pivoting region is defined by stops (4a, 82b) in the lowermost rest position (C) of the guide handle (7).

7. Soil-working machine according to claim 1,
**characterised in that**
the clamping device is formed by an axial tensioning screw (83) - especially in alignment with the pivot axis of the guide handle (7).

8. Soil-working machine according to claim 7,
**characterised in that**
the axial tensioning screw (83) has at least one axial portion of reduced diameter.

9. Soil-working machine according to claim 1,
**characterised in that**
the clamping device is formed by an adjusting lever with which it is possible to set three axial positions.

10. Soil-working machine according to claim 9,
**characterised in that**
the axial positions are defined at least partly by cams or guideways provided on the adjusting lever.

11. Soil-working machine according to claim 1,
**characterised in that**
when the clamping device (83) is loosened, the release of at least the first pivoting region is effected automatically by spring force.

12. Soil-working machine according to claim 11,
**characterised in that**
the spring force is provided by a spring arranged in the pivot bearing (8).

13. Soil-working machine according to claim 11,
**characterised in that**
the spring force is generated by a bias on the guide handle (7) acting in the direction of the pivot axis.

14. Soil-working machine according to claims 2 and 5,
**characterised in that**
to enable the guide handle (7) to pivot freely, the stops (81 a, 82a, 4b, 82b) can be bypassed by further loosening of the clamping device (83).

## Revendications

1. Appareil de travail du sol guidé à la main, en particulier tondeuse à gazon, qui présente un carter (4) sur roues avec un timon de guidage (7) qui s'étend en oblique vers le haut en direction de l'utilisateur, qui est monté à pivotement sur le carter (4) par l'intermédiaire d'un palier (8) et qui peut d'une part être bloqué dans différentes positions de travail (A, B, C) afin d'adapter son extrémité supérieure à la hauteur de travail souhaitée par l'utilisateur, sachant que le timon de guidage (7) peut, d'autre part, être rabattu à partir des positions de travail (A, B, C) dans au moins une position de repos inclinée vers l'avant, et sachant que l'axe de pivotement pour le réglage des différentes positions de travail et l'axe de pivotement pour le rabattement dans la position de repos sont identiques,
**caractérisé en ce que** le palier de pivotement (8) présente deux plages de pivotement axialement décalées, parmi lesquelles la première plage de pivotement englobe lesdites positions de travail (A, B, C) tandis que la deuxième plage de pivotement englobe le rabattement du timon de guidage (7) depuis les positions de travail dans au moins une position de repos, **en ce qu'**il est prévu un dispositif de serrage (83) qui agit dans la direction de l'axe de pivotement et qui libère ou bloque, au choix, les deux plages de pivotement, et **en ce que** la libération de la première plage de pivotement s'effectue avant la libération de la deuxième plage de pivotement.

2. Appareil de travail du sol selon la revendication 1, **caractérisé en ce que** la première plage de pivotement est limitée par des butées (81a, 82a) pour la position de travail la plus haute et la position de travail la plus basse du timon de guidage (7).

3. Appareil de travail du sol selon la revendication 1, **caractérisé en ce que** la première plage de pivotement présente plusieurs saillies et/ou renfoncements qui se succèdent de très près dans la direction de pivotement et parmi lesquels les uns (81) sont disposés solidairement du carter, tandis que les autres (82) se trouvent en liaison fonctionnelle avec le timon de guidage (7).

4. Appareil de travail du sol selon la revendication 3, **caractérisé en ce que** les saillies et les renfoncements de la première plage de pivotement sont formés par deux couronnes dentées (81, 82) qui peuvent être amenées en engagement par complémentarité de forme en direction axiale par le fait qu'une (82) des deux couronnes dentées peut être déplacée en direction axiale par le dispositif de serrage (83).

5. Appareil de travail du sol selon la revendication 1, **caractérisé en ce que** la deuxième plage de pivotement est limitée par des butées (4b, 82b) dans la position de travail la plus basse du timon de guidage (7).

6. Appareil de travail du sol selon la revendication 1, **caractérisé en ce que** la deuxième plage de pivotement est limitée par des butées (4a, 82b) à la position de repos la plus basse (C) du timon de guidage (7).

7. Appareil de travail du sol selon la revendication 1, **caractérisé en ce que** le dispositif de serrage est formé par une vis de serrage axiale (83), en particulier en alignement avec l'axe de pivotement du timon de guidage (7).

8. Appareil de travail du sol selon la revendication 7, **caractérisé en ce que** la vis de serrage axiale (83) présente au moins un tronçon axial de diamètre réduit.

9. Appareil de travail du sol selon la revendication 1, **caractérisé en ce que** le dispositif de serrage est formé par un levier de commande qui permet de régler trois positions de travail.

10. Appareil de travail du sol selon la revendication 9, **caractérisé en ce que** les positions axiales sont au moins partiellement définies par des cames ou des coulisses mises en place sur le levier de commande.

11. Appareil de travail du sol selon la revendication 1, **caractérisé en ce que**, lorsqu'on desserre le dispositif de serrage (83), la libération au moins de la première plage de pivotement a lieu automatiquement par force de ressort.

12. Appareil de travail du sol selon la revendication 11, **caractérisé en ce que** la force de ressort est produite par un ressort disposé dans le palier de pivotement (8).

13. Appareil de travail du sol selon la revendication 11, **caractérisé en ce que** la force de ressort est produite par une précontrainte du timon de guidage (7) qui agit dans la direction de l'axe de pivotement.

14. Appareil de travail du sol selon les revendications 2 et 5, **caractérisé en ce que**, en vue de la libre faculté de pivotement du timon de guidage (7), les butées (81a, 82a, 4b, 82b) peuvent être surmontées en poursuivant le desserrage du dispositif de serrage (83).
